(19) Europäisches Patentamt
European Patent Office
Office européen des brevets

(11) Veröffentlichungsnummer: **0 272 482 B1**

(12) # EUROPÄISCHE PATENTSCHRIFT

(45) Veröffentlichungstag der Patentschrift: **23.10.91**

(51) Int. Cl.5: **C08K 5/53**

(21) Anmeldenummer: **87117369.6**

(22) Anmeldetag: **25.11.87**

(54) **Flammwidrige Polyurethanschaumstoffe.**

(30) Priorität: **20.12.86 DE 3643685**

(43) Veröffentlichungstag der Anmeldung:
**29.06.88 Patentblatt 88/26**

(45) Bekanntmachung des Hinweises auf die Patenterteilung:
**23.10.91 Patentblatt 91/43**

(84) Benannte Vertragsstaaten:
**BE DE FR GB IT NL SE**

(56) Entgegenhaltungen:
**US-A- 3 042 701**
**US-A- 3 058 941**

(73) Patentinhaber: **HOECHST AKTIENGESELLSCHAFT**
**Postfach 80 03 20**
**W-6230 Frankfurt am Main 80(DE)**

(72) Erfinder: **Staendeke, Horst, Dr.**
**Alte Honrather Strasse 22**
**W-5204 Lohmar(DE)**
Erfinder: **Krause, Werner, Dr.**
**Henriette-Lott-Weg 8**
**W-5030 Hürth(DE)**

**EP 0 272 482 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft flammwidrige Polyurethanschaumstoffe, insbesondere flammwidrige Polyrethanweichschäume auf Basis von Polyetherpolyolen.

Polyurethane, insbesondere Polyurethanschäume haben in der Industrie auf den verschiedensten Sektoren ein breites Anwendungsgebiet gefunden. Ihre Bedeutung steigt ständig weiter. Wegen ihrer ausgezeichneten wärme- und schallisolierenden Eigenschaften werden Polyurethanschaumstoffe vielfältig z.B. in der Bauindustrie, als Wärmeisolatoren für Kühlschränke und -wagen, Leitungen, Tanks, Tankwagen und zu vielen anderen Zwecken verwendet. Dabei wird als besonders günstig ihre leichte Herstellbarkeit an Ort und Stelle empfunden. Polyurethanweichschäume werden in großen Mengen zur Fertigung von Matratzen, Polstern für Möbel und Automobilsitze sowie in vielen anderen Anwendungsgebieten industriell eingesetzt.

Unterdessen ist bei einigen dieser Einsatzgebiete ein ausreichender Flammschutz entweder vorgeschrieben oder zumindest erwünscht. Mannigfaltige Versuche sind deshalb unternommen worden, flammwidrige Polyurethane herzustellen, meistens indem phosphorhaltige Substanzen als Flammschutzkomponenten zugefügt wurden. Handelte es sich dabei um Verbindungen mit niedrigem Molekulargewicht, so bestand insbesondere bei Polyurethanschaum die Gefahr, daß sie mit der Zeit aus dem Kunststoff auswandern. Bekannte Vertreter derartiger Zusatzmittel sind beispielsweise Tris-(2-chlorethyl)-phosphat und Tris-(2-chlorpropyl)-phosphat.

Man versuchte, die Gefahr des Auswanderns des Flammschutzmittels aus dem Kunststoff zu vermeiden, indem man sich reaktiver Flammschutzmittel bediente, die in das Polyurethanmolekül chemisch eingebunden sind, oder indem man Verbindungen mit deutlich höherem Molekulargewicht, z.B. Diphosphorsäureester einsetzte.

Aus der US-PS 37 07 586 ist bekannt, daß halogenierte Phosphorsäureester vom Typ

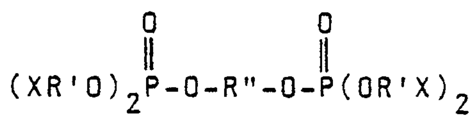

mit X = Halogen; R' , R" = Alkylen-
wirksame Flammschutzmittel für Polyurethanweichschäume auf Basis von Polyetherpolyolen sind.

Aus der US-PS 30 14 956 ist ferner bekannt, daß halogenierte Phosphorigsäure-Polyphosphonsäureester vom Typ

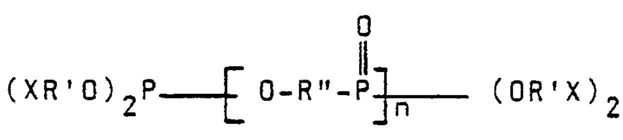

mit X = Halogen; R' , R" = Alkylen-
bzw. halogenierte Polyphosphonsäureester vom Typ

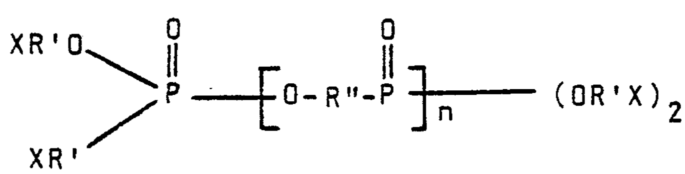

mit X = Halogen; R', R" = Alkylen-
als Flammschutzmittel für Polyurethanschäume eingesetzt werden können.

Überraschenderweise wurde nun gefunden, daß halogenierte Phosphonophosphorsäureester vom Typ

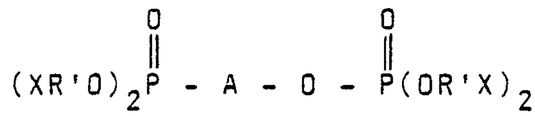

mit

X = Halogen,

R' = Alkylen- mit I bis 4 C-Atomen

A =

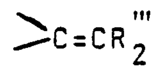

oder

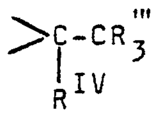

R''' = gleiche oder verschiedene Reste aus Alkyl- mit I bis 4 C-Atomen, Halogen oder Wasserstoff und

$R^{IV}$ = Halogen oder Wasser

ebenfalls wirksame Flammschutzmittel für Polyurethanschaumstoffe, inbesondere für Polyurethanweichschäume auf Basis von Polyetherpolyolen, sind, wobei es besonders überraschend und unerwartet war, daß trotz der Tatsache, daß es sich bei den Verbindungen um nichtreaktive, das heißt nicht mit den Komponenten der Polyurethanherstellung reagierende Flammschutzmittel handelt, der Flammschutzeffekt im Verlauf von Wärmealterungstests sogar besser wird.

Gegenstand der vorliegenden Erfindung sind somit flammwidrige Polyurethanschaumstoffe, insbesondere flammwidrige Polyurethanweichschäume auf Basis von Polyetherpolyolen, die durch einen Gehalt von 2-5o Gewichtsteilen, bezogen auf I00 Gewichtsteile Polyol, an mindestens einem halogenierten Phosphonophosphorsäureester der allgemeinen Formel

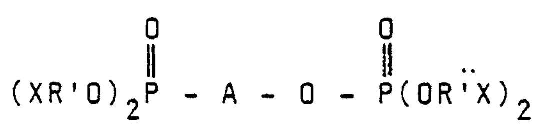

in welcher

X = Halogen,

R' = Alkylen- mit I bis 4 C-Atomen,

A =

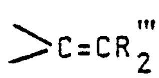

oder

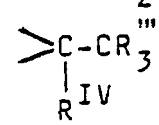

R''' = gleiche oder verschiedene Reste aus Alkyl- mit I bis 4 C-Atomen, Halogen oder Wasserstoff und

$R^{IV}$ = Halogen oder Wasserstoff

bedeuten, gekennzeichnet sind.

Vorteilhafterweise kommt den flammwidrigen Polyurethanschaumstoffen ein Gehalt von 5 - I5 Gewichtsteilen an halogeniertem Phosphonophosphorsäureester, bezogen auf I00 Gewichtsteile Polyol zu.

In der vorgenannten allgemeinen Formel für den halogenierten Phosphonophosphorsäureester steht der Begriff Halogen insbesondere für Chlor oder Brom. Beispielsweise wird als halogenierter Phosphonophosphorsäureester gemäß vorliegender Erfindung der Phosphorsäure-bis-(2-chlorethyl)-I-[bis-(2-chlorethyl)-

phosphono]-vinylester der Formel

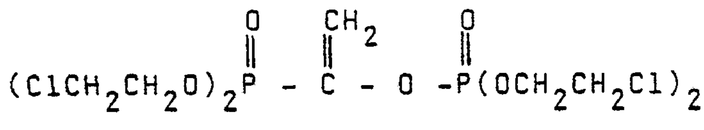

eingesetzt.

Die erfindungsgemäß verwendeten halogenierten Ester können in einfacher Reaktion aus Phosphorigsäuretriestern und halogenierten Carbonsäurehalogeniden und gegebenenfalls anschließender Halogenierung hergestellt werden. Eine bevorzugte Herstellungsweise dieser Verbindungen ist Gegenstand von Patent/Patentanmeldung DE-A 36 43 684.4 (≡EP 272484) der Anmelderin. Hiernach besteht das Verfahren zur Herstellung von halogenierten Phosphonophosphorsäureestern der allgemeinen Formel

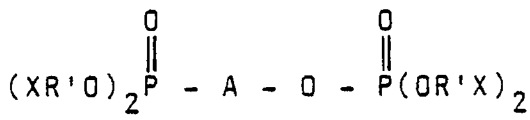

in welcher

X = Halogen,

R′ = Alkylen- mit I bis 4 C-Atomen,

A =

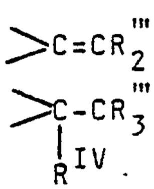

oder

R‴ = gleiche oder verschiedene Reste aus Alkyl- mit I bis 4 C-Atomen, Halogen oder Wasserstoff und

$R^{IV}$ = Halogen oder Wasserstoff

bedeuten, darin, daß man in einem ersten Verfahrensschritt Phosphor(III)-chlorid in Gegenwart eines Katalysators mit Alkylenoxid umsetzt, dann von überschüssigem Alkylenoxid befreit und das erhaltene Reaktionsprodukt aus im wesentlichen Phosphorigsäuretrialkylester ohne dessen Aufarbeitung in einem zweiten Verfahrensschritt mit dem betreffenden Halogenacylhalogenid im Molverhältnis 2 : I - I,5 umsetzt, und dann entweder den Phosphonophosphorsäureester nach mehrmaligem Waschen mit Wasser und/oder einer wässerigen Lösung von Ammoniak isoliert oder diesen ohne weitere Aufarbeitung in einem dritten Verfahrensschritt unter UV-Katalyse halogeniert und dann erst nach mehrmaligem Waschen mit Wasser und/oder einer wässerigen Lösung von Ammoniak isoliert.

Als Alkylenoxid kann insbesondere das Ethylenoxid eingesetzt werden, während der Begriff Halogen in der allgemeinen Formel für Chlor oder Brom steht. Wenn dann als Halogenacylhalogenid das Chloressigsäurechlorid eingesetzt wird, kann der Phosphorsäure-bis-(2-chlorethyl)-I-[bis-(2-chlorethyl)-phosphono]-vinylester der allgemeinen Formel

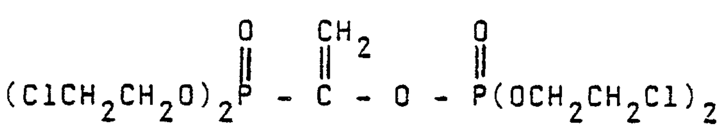

erhalten werden.

Beim Verfahren gemäß Patent/Patentanmeldung DE-A 36 43 684.4 (EP 272484) wird im zweiten Verfahrensschritt ein Molverhältnis von Phosphorigsäuretrialkylester zu Halogenacylhalogenid von 2 : I,I

eingehalten. Schließlich sollten beim ersten Verfahrensschritt Temperaturen von -20° bis +20° C, vorzugsweise 0° bis l0° C, und Reaktionszeiten zwischen 0,5 - 5 Stunden, vorzugsweise 2 - 3 Stunden, eingehalten werden, während beim zweiten und gegebenenfalls dritten Verfahrensschritt Temperaturen von 0° bis l00° C, vorzugsweise < 3o° C, und Reaktionszeiten zwischen 0,5 - 5 Stunden, vorzugsweise l - 2 Stunden, einzuhalten sind.

Nach der Einarbeitung der so hergestellten Flammschutzmittel in den Polyurethanschaum wurde das Brandverhalten der Schäume nach den US-Brandtests FMVSS 3o2 (für Materialien, die im Innenraum von Personenkraftwagen eingesetzt werden) und ASTM D 2863-74 (sog. Sauerstoffindex-Test) bestimmt.

Beim FMVSS 3o2-Test werden Schaummuster in den Abmessungen 36o x loo x l3 mm geprüft, indem sie in horizontaler Position l5 Sekunden mit einem Bunsenbrenner (Flammenhöhe: 38 mm) beflammt werden. Zur Beurteilung des Tests werden sowohl die Brennstrecke als auch die Brenngeschwindigkeit herangezogen. Dadurch ergeben sich folgende Klassen:

SE ("self-extinguishing")

Das Material brennt, verlöscht aber innerhalb der Zone I (d.h. bis zur 38 mm-Markierung). - In der Tabelle I ist zur besseren Differenzierung die Brennstrecke (BS: ... mm) angegeben worden.

SE/NBR ("self-extinguishing/no burning rate")

Die Flamme verlöscht innerhalb von 60 sec nach Überschreiten der 38 mm-Markierung, aber vor Erreichen der 76 mm-Markierung (Zone II).

SE/B ("self-extinguishing/burning")

Die Flamme verlöscht vor dem Erreichen der 292 mm-Markierung (Zone III). Für die Brennstrecke innerhalb der Zonen II und III wird eine Brenngeschwindigkeit (... mm . $min^{-1}$) ermittelt.

B ("burning")

Die Flamme erreicht die 330 mm-Markierung (Zone IV). Für die Brennstrecke innerhalb der Zonen II bis IV wird eine Brenngeschwindigkeit (... mm . $min^{-1}$) ermittelt.

Die nachfolgenden Ausführungsbeispiele dienen der näheren Erläuterung der Erfindung.

Synthese 1

Herstellung des Flammschutzmittels Phosphorsäure-bis-(2-chlorethyl)-l-[bis-(2-chlorethyl)-phosphono]-vinylester

In einen Rührreaktor von 5 l Inhalt mit Rückflußkühler und Thermometer wurden l9oo g (l4 Mol) Phosphor(III)-chlorid eingefüllt und mit l0 g Titan(IV)-chlorid versetzt. Dann wurden im Verlauf von 3 Stunden unter Rühren 2ooo .g (45 Mol) Ethylenoxid eingeleitet, wobei die Reaktionstemperatur durch Kühlung unter l0° C gehalten wurde.

Nach einer Nachreaktion von l Stunde bei 80° C wurde das überschüssige Ethylenoxid bei vermindertem Druck von ca. 30 mbar entfernt. Anschließend wurden im Verlauf von l,5 Stunden 87o g (7,7 Mol) Chloressigsäurechlorid eingetropft, wobei durch Kühlung die Reaktionstemperatur unter 30° C gehalten wurde.

Nach einer Nachreaktionszeit von l,5 Stunden bei 90 - l00° C wurde der Rückflußkühler durch einen absteigenden Kühler ersetzt; das als Reaktionsnebenprodukt entstandene Dichlorethan wurde abdestilliert. Weitere flüchtige Nebenbestandteile wurden dann unter vermindertem Druck von ca. lo mbar entfernt.

Das Reaktionsprodukt wurde anschließend nacheinander mit 6 Liter Wasser, 6 Liter lo %iger Ammoniumhydroxidlösung und nochmals mit 6 Liter Wasser gewaschen. Unter langsamer Temperatursteigerung wurde dann das Wasser bei einem Druck von ca. l2o mbar abdestilliert; die restlichen flüchtigen Bestandteile wurden bei einer Temperatur von l20° C und einem Druck von l mbar entfernt.

Nach dem Abkühlen wurden 249o g einer farblosen Flüssigkeit mit folgenden analytischen Daten erhalten:
Dichte (bei 25° C): l,445 g/ml
Viskosität (bei 25° C): 280 m Pa • s

Brechungsindex (bei 25° C): I,4867
Säurezahl: I,2 mg KOH/g
Phosphorgehalt: I3,0 % P (theor. I3,6 % P)
Chlorgehalt: 32,I % Cl (theor. 3I,3 % Cl)

Die $P^{31}$-NMR-spektroskopische Untersuchung ergab, daß 85 % der gewünschten Verbindung vorlagen; der Rest verteilte sich auf eine Reihe strukturverwandter Phosphorsäure- und Phosphonsäureester.

Beispiel 1

Herstellung eines flammwidrigen Polyurethanweichschaums

In einen 2 Liter-Pappbecher wurden
I000 g ® Caradol 48-2 (SHELL), ein Polyetherpolyol
50 g Flammschutzmittel aus Synthese 1
40 g Wasser
4 g Dimethylethanolamin
2 g ® Dabco 33 LV (HOUDRY-HÜLS), ein Katalysator auf Basis tertiärer Amine
2 g ® Desmorapid SO (BAYER), ein Katalysator auf Basis von Organozinnverbindungen
I0 g ® Tegostab B 364o (GOLDSCHMIDT), ein Schaumstabilisator auf Basis von Siliconverbindungen
eingewogen und mit einem Intensivmischer I min gerührt. Unter weiterem Rühren (mit stark reduzierter Drehzahl) wurden dann 5I3 g ® Desmodur T 8o (BAYER), ein Diisocyanato-toluol zugegeben; anschließend wurde lo sec intensiv gemischt.

Anschließend wurde die Mischung in eine Holzform (40 x 40 x 50 cm) mit eingestellter Papiertüte gegossen. Die Steigzeit des Schaums betrug I32 sec.

Nach 5 min wurde der Schaumblock zur weiteren Aushärtung für I5 min in einen Umluft-Trockenschrank bei einer Temperatur von I4o° C eingestellt.

Die weitere Ausprüfung des Schaums erfolgte nach einer Lagerzeit von mindestens 24 Stunden bei Raumtemperatur. Die Ergebnisse sind in Tabelle I aufgeführt.

Beispiel 2

Es wurde analog Beispiel 1 verfahren, wobei jedoch 75 g Flammschutzmittel aus Synthese 1 eingesetzt wurden. Die Ergebnisse der Schaumausprüfungen sind in Tabelle I aufgeführt.

Beispiel 3

Es wurde analog Beispiel 1 verfahren, wobei jedoch I00 g Flammschutzmittel aus Synthese 1 eingesetzt wurden. Die Ergebnisse der Schaumausprüfungen sind in Tabelle I aufgeführt.

Beispiel 4 (Vergleich)

Es wurde nach Beispiel 1 verfahren, wobei jedoch 50 g ® Thermolin I0I (OLIN Corp), ein Tetrakis-(2-Chlorethyl)-ethylendiphosphat als Flammschutzmittel eingesetzt wurden. Die Ergebnisse der Schaumausprüfungen sind in Tabelle I aufgeführt.

Beispiel 5 (Vergleich)

Es wurde analog Beispiel 1 verfahren, wobei jedoch 75 g ® Thermolin I0I (OLIN Corp.) als Flammschutzmittel eingesetzt wurden. Die Ergebnisse der Schaumausprüfungen sind in Tabelle I aufgeführt.

Beispiel 6 (Vergleich)

Es wurde analog Beispiel 1 verfahren, wobei jedoch I00 g ® Thermolin I0I (OLIN Corp.) als Flammschutzmittel eingesetzt wurden. Die Ergebnisse der Schaumausprüfungen sind in Tabelle I aufgeführt.

T A B E L L E 1 Ausprüfungen von Polyurethanweichschäumen

| Bei-spiel | Flammschutzmittel | | Roh-dichte | Brandtests gemäß FMVSS 3o2 [1] und ASTM-D 2863-74 [2] | | | | | |
|---|---|---|---|---|---|---|---|---|---|
| | Typ | Menge | | ungealtert | | Alterung: 22 h 14o°C / Umluft | | Alterung: 72 h 14o°C / Umluft | |
| | | ... Teile/ loo Teile Polyol | ($kg/m^3$) | FMVSS 3o2-Klasse | LOI [3] | FMVSS 3o2-Klasse | LOI [3] | FMVSS 3o2-Klasse | LOI [3] |
| 2 | ~~Beispiel 1~~ (Erfindung) | 5 | 26 | SE/B BR: 85 $mm^{1}\cdot min^{-1}$ | 0,20 | SE/B BR: 66 $mm^{1}\cdot min^{-1}$ | 0,21 | SE BS: 17 mm | 0,22 |
| 3 | ~~Beispiel 1~~ (Erfindung) | 7,5 | 28 | SE/NBR | 0,21 | SE BS: 16 mm | 0,21 | SE BS: 13 mm | 0,22 |
| 4 | ~~Beispiel 1~~ (Erfindung) | 10 | 27 | SE BS: 21 mm | 0,21 | SE BS: 16 mm | 0,22 | SE BS: 12 mm | 0,23 |
| 5 | ®Thermolin lol (Vergleich) | 5 | 26 | SE/B BR: 99 $mm^{1}\cdot min^{-1}$ | 0,21 | n.b. [4] | n.b. | SE/B BR: 139 $mm^{1}\cdot min^{-1}$ | 0,20 |
| 6 | ®Thermolin lol (Vergleich) | 7,5 | 26 | SE BS: 31 mm | 0,22 | n.b. | n.b. | SE/NBR | 0,21 |
| 7 | ®Thermolin lol (Vergleich) | 10 | 28 | SE BS: 23 mm | 0,23 | n.b. | n.b. | SE/NBR | 0,22 |

1) Federal Motor Vehicle Safety Standard 3o2 (USA)
2) Sauerstoff-Index-Test
3) Limited Oxygen Index (ASTM D 2863-74)
4) n.b. = nicht bestimmt

Synthese 1

Erlaüterungen zur Tabelle I

Aus den Brandtestergebnissen geht hervor, daß die erfindungsgemäß eingesetzten Phosphono-phosphorsäureester vom Typ

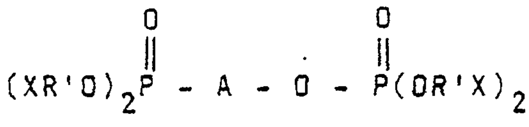

beim Einsatz in Polyetherweichschäumen den vielfach eingesetzten Phosphorsäureestern vom Typ

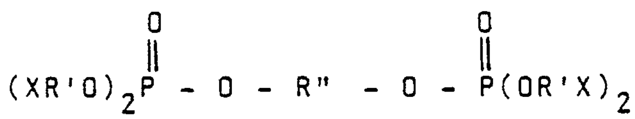

(= ® Thermolin 101)

beim Brandverhalten im ungealterten Schaum gleichwertig sind. Nach Alterung in trockener Hitze zeigen die erfindungsgemäßen Schäume insbesondere im niedrigen Flammschutzmittelkonzentrationsbereich sogar eine deutliche Verbesserung des Flammschutzeffektes, während die Vergleichsschäume demgegenüber in allen Konzentrationsbereichen eine Verschlechterung des Flammschutzeffektes erkennen lassen.

## Patentansprüche

1. Flammwidrige Polyurethanschaumstoffe, insbesondere flammwidrige Polyurethanweichschäume auf Basis von Polyetherpolyolen, gekennzeichnet durch einen Gehalt von 2 - 50 Gewichsteilen, bezogen auf 100 Gewichtsteile Polyol, an mindestens einem halogenierten Phosphonophosphorsäureester den allgemeinen Formel

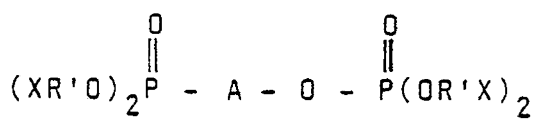

in welcher

X = Halogen,
R′ = Alkylen- mit 1 bis 4 C-Atomen,
A =

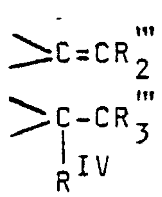

oder

R‴ = gleiche oder verschiedene Reste aus Alkyl- mit 1 bis 4 C-Atomen, Halogen oder Wasserstoff und
$R^{IV}$ = Halogen oder Wasserstoff

bedeuten.

2. Flammwidrige Polyurethanschaumstoffe nach Anspruch 1, gekennzeichnet durch einen Gehalt von 5 - 15 Gewichtsteilen halogeniertem Phosphonophosphorsäureester, bezogen auf 100 Gewichtsteile Polyol.

3. Flammwidrige Polyurethanschaumstoffe nach Anspruch 1 oder 2, dadurch gekennzeichnet, daß in der allgemeinen Formel des halogenierten Phosphonophosphorsäureesters Halogen für Chlor oder Brom steht.

4. Flammwidrige Polyurethanschaumstoffe nach Anspruch I bis 3, dadurch gekennzeichnet, daß der halogenierte Phosphonophosphorsäureester der Phosphorsäure-bis-(2-chlorethyl)-I-[bis-(2-chlorethyl)-phosphono]-vinyl-ester der Formel

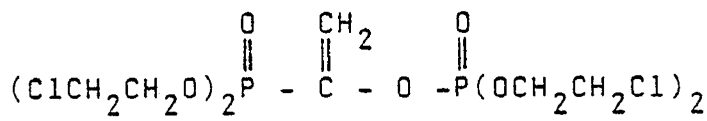

ist.

**Claims**

1. A flame-resistant polyurethane foam, in particular a soft flame-resistant polyurethane foam based on polyether polyols, containing 2 - 50 parts by weight, based on 100 parts by weight of polyol, of at least one halogenated phosphonophosphoric acid ester of the general formula

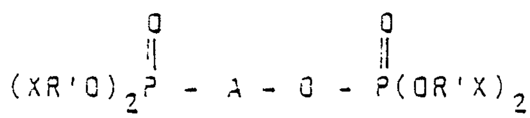

in which

X = halogen,
R' = alkylene having 1 to 4 carbon atoms,
A =

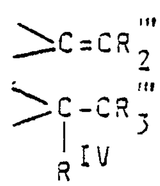

or

R''' = identical or different radicals from the series comprising alkyl having 1 to 4 carbon atoms, halogen and hydrogen, and
$R^{IV}$ = halogen or hydrogen.

2. A flame-resistant polyurethane foam as claimed in claim 1, containing 5 - 15 parts by weight of halogenated phosphonophosphoric acid ester, based on 100 parts by weight of polyol.

3. A flame-resistant polyurethane foam as claimed in claim 1 or 2, wherein, in the formula of the halogenated phosphonophosphoric acid ester, halogen is chlorine or bromine.

4. A flame-resistant polyurethane foam as claimed in any of claims 1 to 3, wherein the halogenated phosphonophosphoric acid ester is bis(2-chloroethyl)-1-[bis(2-chloroethyl)phosphono]vinyl phosphate, which has the formula

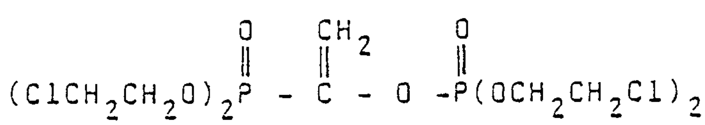

.

## Revendications

1. Mousses de polyuréthannes ignifuges, en particulier mousses souples de polyuréthannes ignifuges à base de polyétherpolyols, caractérisées en ce qu'elles contiennent 2-50 parties en poids, pour 100 parties en poids de polyol, d'au moins un ester phosphonophosphorique halogéné de formule générale

$$(XR'O)_2\overset{O}{\overset{\|}{P}} - A - O - \overset{O}{\overset{\|}{P}}(OR'X)_2$$

dans laquelle
X représente un halogène,
R' représente un groupe alkylène en $C_1$-$C_4$,
A représente un groupe

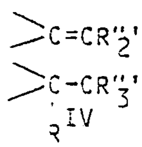 ou

R''' représente des restes identiques ou différents choisis parmi un groupe alkyle en $C_1$-$C_4$, un halogène et l'hydrogène et
$R^{IV}$ représente un halogène ou l'hydrogène.

2. Mousses de polyuréthannes ignifuges selon la revendication 1, caractérisées en ce qu'elles contiennent 5-15 parties en poids d'ester phosphonophosphorique halogéné, pour 100 parties en poids de polyol.

3. Mousses de polyuréthannes ignifuges selon la revendication 1 ou 2, caractérisées en ce que, dans la formule générale de l'ester phosphonophosphorique halogéné, l'halogène représente le chlore ou le brome.

4. Mousses de polyuréthannes ignifuges selon les revendications 1 à 3, caractérisées en ce que l'ester phosphonophosphorique halogéné est le phosphate de bis-(2-chloroéthyle) et de 1-[bis(2-chloroéthyl)-phosphono]-vinyle de formule

$$(ClCH_2CH_2O)_2\overset{O}{\overset{\|}{P}} - \overset{CH_2}{\overset{\|}{C}} - O - \overset{O}{\overset{\|}{P}}(OCH_2CH_2Cl)_2$$